# EUROPEAN PATENT SPECIFICATION

(11) **EP 1 579 764 B1**
(45) Date of publication and mention of the grant of the patent: **31.01.2007**
(21) Application number: 04007096.3
(22) Date of filing: 24.03.2004
(51) Int. Cl.: A21B 1/02, F24C 7/06, A47J 37/06, A47J 36/02

(54) **Electric clay/ceramic oven**
Elektrischer Tonwaren-/Keramikofen
Four électrique d'argile

(43) Date of publication of application: 28.09.2005
(73) Proprietor: Abdulsamad M. H. Nooh, Jeddah 21391 (SA)
(72) Inventor: Abdulsamad M. H. Nooh, Jeddah 21391 (SA)
(74) Representative: Viering, Jentschura & Partner

(56) References cited:
- GB-A- 469 250
- GB-A- 191 322 402
- US-A- 3 881 090
- US-A- 6 079 400
- US-B1- 6 439 107

## Description

### Field of the invention

The invention relates to an electric clay/earthenware oven according to the preamble of claim 1. Accordingly, the present invention generally relates to an electric clay/earthenware oven for general purpose heating, cooking/baking in houses, restaurants etc.

### Background of the invention

Traditionally clay ovens are preferred for cooking due of several advantages. Primarily cooking in earthenware imparts a special taste to food because of the natural properties of clay which includes its slow cooking characteristics. Such taste and flavour is not possible in ordinary metal utensils now used for cooking and therefore even today special provisions are made in households and restaurants for cooking in clay utensils.

Cooking in earthenware requires special arrangements mainly supply of distributed source of heating. Traditionally meals are cooked outdoors by using burning wood or charcoal as the source of heat. Often holes are dug in the ground where the carthen pot is placed over wood or charcoal which is then ignited. The process is cumbersome and also leads to the production of a lot of smoke, fumes and bad smell. These added with the long time taken for preparing the fire to reach a state which is optimum for cooking and the hazards associated with use of open fire have made the process unpopular.

Therefore there is a need of an oven that can provide simple and fast cooking hot at the same time gives food the same flavour and taste as achieved using earthenware.

An oven of the initially-mentioned type is known for example from US-A-3 881 090.

### Objects of the invention

It is an object of the present invention to provide for a cooking device that is simple and cost effective yet imparts meals cooked therein with the taste and flavour of food cooked traditionally in earthenware.

Another object of the present invention is to provide for a cooking device that does not exit fumes or smoke while cooking.

A further object of the present invention is to provide for a cooking device which can be easily moved and transported.

Yet further object of the present invention is to provide for a cooking device which can be used to cook various meals and preparations.

Yet another object of the present invention is to provide for a cooking device whose exterior does not get heated up even after long hours of operation.

### Summary of the invention

The invention provides an electric clay/earthenware oven comprising the features of claim 1. Further embodiments of the invention are described in the depending claims.

### Brief description of the invention

The electric clay oven of the present invention is a new modern oven easy to use and to move. The oven preferably has an insulator preferably made of rock wool or glass wool placed between the clay cavity and outer housing. The outer housing may have plurality of wheels fitted at the bottom for easy movement. The wheels may be 4 to 6 in number. The clay cavity has a cover made from material selected from clay or a metal, preferably steel. The cavity is a one piece clay pot with the top and bottom having equal inside diameter while the middle portion is large in diameter. This shape facilitates the heat circulation. The heating elements are preferably connected to an electric circuit and controlled by a control panel. The control panel preferably has a power switch, thermostat, timer, indicator lamp and temperature indicator. The heating elements are preferably circular in shape and located around the bottom inside clay cavity. The oven may be accompanied with accessories for baking and removing baked dough. A full meal may be prepared using a pot with plurality of steel net/shelf, one on top of the other fitted to the pot. Rice may be cooked in the pot while meat and vegetables may be cooked in the net/shelves.

The device does not generate any smoke or unpleasant smell during cooking. It may be utilized for baking bread and roti on the inner walls of the clay cavity. Normal meals including meat can be prepared in substantial amounts to feed at least 40 people. Most importantly the device uses the healthy characteristics of cooking using clay which imparts the traditionally recognized favour and taste.

The oven of the present invention will now be described with reference to a non-limiting preferred embodiment and accompanying drawings in which:

### Description of accompanying drawings

Figure 1 shows the electric clay oven,
Figure 2 shows a horizontal cross sectional view of the oven,
Figure 3 shows the control panel,
Figure 4 shows the cooking utensils and accessories,
Figure 5 shows the clay cavity,
Figure 6 shows the outside case,
Figure 7 shows the electric circuit and heating element, and
Figure 8 shows the accessories for baking.

### Description of preferred embodiment

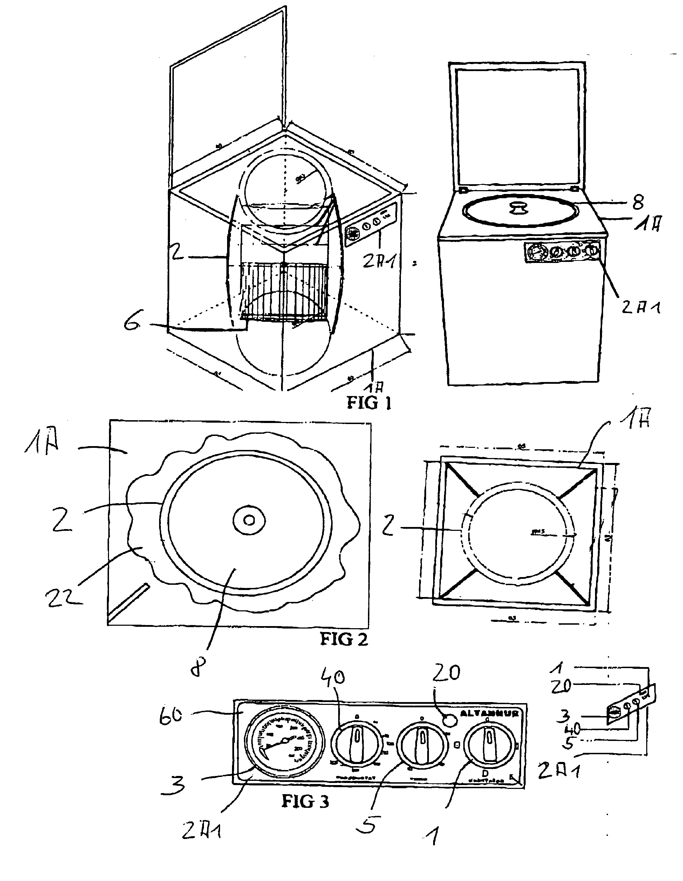

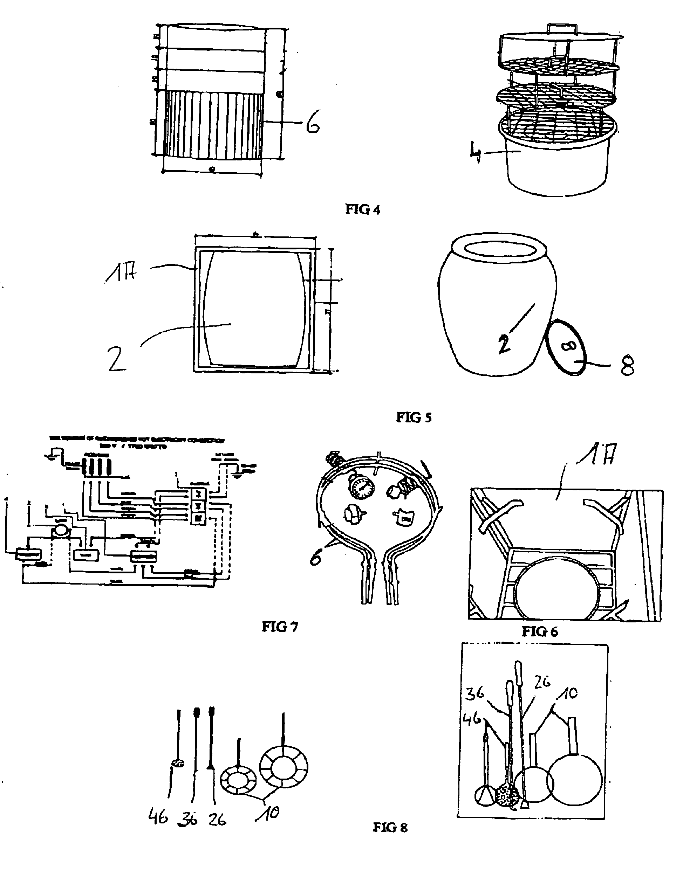

Reference is first drawn to figure 1 which shows the electric clay oven of the present invention. The outer housing 1A has an inner cavity 2 made of clay or ceramic. The clay cavity is shown separately in figure 5. The cavity 2 has a special design with the top and bottom inside diameter being equal and but wider in the middle. Such a shape facilitates heat circulation and thereby consumes less power. The cavity has a cover 8 which may be made of clay or metal like steel.

The heating source 6 comprising one or more of heaters depending on the size of the cavity and is fitted near the bottom of the inside cavity from inside. Figure 7 shows the heaters 6 in detail.

The oven has an electric circuit to control the operation of the oven which is controlled from the control panel 2A1.
Figure 3 shows the control panel in detail consisting of a power switch 1, light indicator 20, temperature indicator 3, thermostat to control the temperature 40, 120 minutes timer 5 all housed on an aluminium plate 60.
Figure 4 shows the cooking utensils namely a pot 4 showed in detail in figure 4. The pot may have nets 7 placed one above the other for cooking meat or vegetables simultaneously.

The outside case 1A is made of metal or steel. The interior construction of the case is shown in figure 6. Top holders 1b and bottom seat holder 30 helps in holding the clay cavity fixed in place.

The outer case is also provided with heat insulator 22 shown in figure 2. The insulators are made of rock or glass wool to resist the transfer of heat from the cavity to the outer case. In fact the outer case remains at normal temperature even after extended hours of use. The clay cavity also helps in insulating the heat. This contributes to better utilization of power and efficient operation. This also leads to lessening the chances of accidents.

Figure 7 shows the electric circuit comprising a switch 1, a small lamp 20, temperature indicator 3, a thermostat 40, a timer 5, heaters (6).

Figure 8 shows the accessories for baking bread and removing the baked bread.

### Method of operation

The device has to be first switched on using the switch 1 (figure 3). The timer 5 has to be set between 0 and 120 minutes and the desired temperature using the thermostat 40. The indicator lamp 20 will then light and the oven will be operational. The oven has to be left to heat for around 20 minutes before putting the food on temperature around 200 degrees.

For cooking rice and meat, cooking utensils as shown in figure 4 may be used. The oven is preferably heated to 150 degrees and then the utensil with rice in the pot 4 and meat on the net is put in the oven for 120 minutes on 200 degrees. At the end of the stipulated time the timer will sound a bell and the oven will be turned off automatically.

For baking, wheat is first mixed with water as required and the dough is prepared and shaped. The surface of the clay cavity that will be used should first be wiped with a small amount of water. The accessory 10 shown in figure 8 is used to stick the shaped dough to the inside clay cavity. The oven is then covered for 20 minutes after which the baked roti is taken out using any of accessories 26, 36, 46 of figure 8.

## Claims

1. An electric clay/earthenware oven comprising an outer housing (1A) having a cavity (2) made of clay or ceramic provided with heating elements (6), **characterized in that** said cavity (2) is a one piece pot, the top and bottom of said pot having equal inside diameter while the middle portion being larger in diameter.

2. The oven as claimed in claim 1, **characterized in that** it comprises an insulator (22) preferably made of rock or glass wool placed between said clay cavity (2) and said housing (1A).

3. The oven as claimed in claim 1, **characterized in that** said outer housing (1A) has a plurality of wheels fitted at the bottom for easy movement.

4. The oven as claimed in claim 1, **characterized in that** said inside clay cavity (2) has a cover (8) made from material selected from clay or a metal, preferably steel.

5. The oven as claimed in any preceding claim, **characterized in that** said heating elements (6) are connected to an electric circuit and controlled by a control panel (2A1).

6. The oven as claimed in claim 5, **characterized in that** said control panel (2A1) comprises power switch (1), thermostat (40), timer (5), indicator lamp (20), and temperature indicator (3).

7. The oven as claimed in any preceding claim, **characterized in that** said heating elements (6) are circular in shape and located around the bottom inside clay cavity (2).

8. The oven as claimed in any preceding claim, comprising accessories (26, 36, 46) for baking and removing baked dough.

9. The oven according to any preceding claim, comprising a cooking pot (4) for cooking rice having plurality of steel net/shelf, one on top of the other fitted to said rice pot.

## Patentansprüche

1. Elektrischer Ton/Steingut-Ofen, welcher ein Außen-Gehäuse (1A) mit einer Hohlkammer (2) aufweist, welche aus Ton oder Keramik hergestellt ist und welche mit Heiz-Elementen (6) versehen ist, **dadurch gekennzeichnet, dass** die Hohlkammer (2) ein einstückiger Topf ist, wobei die Oberseite und die Unterseite des Topfes denselben Durchmesser haben, wobei der Mittelabschnitt im Durchmesser größer ist.

2. Ofen gemäß Anspruch 1, **dadurch gekennzeichnet, dass** er einen Isolator (22) aufweist, welcher vorzugsweise aus SteinWolle oder Glas-Wolle hergestellt ist, welche zwischen der Ton-Hohlkammer (2) und dem Gehäuse (1A) angeordnet ist.

3. Ofen gemäß Anspruch 1, **dadurch gekennzeichnet, dass** das Außen-Gehäuse (1A) eine Mehrzahl von Rädern hat, welche zum einfachen Bewegen an der Unterseite montiert sind.

4. Ofen gemäß Anspruch 1, **dadurch gekennzeichnet, dass** die Innenseite der Ton-Hohlkammer (2) eine Abdeckung (8) hat, welche aus einem Material hergestellt ist, welches aus Ton oder Metall, vorzugsweise Stahl gewählt ist.

5. Ofen gemäß einem der vorhergehenden Ansprüche, **dadurch gekennzeichnet, dass** die Heiz-Elemente (6) an einem elektrischen Schaltkreis angeschlossen sind und mittels eines Bedienfeldes (2A1) gesteuert werden.

6. Ofen gemäß Anspruch 5, **dadurch gekennzeichnet, dass** das Bedienfeld (2A1) einen Leistungs-Schalter (1), einen Thermostaten (40), einen Zeitgeber (5), einen Anzeige-Leuchtkörper (20) und eine Temperatur-Anzeige (3) aufweist.

7. Ofen gemäß einem der vorhergehenden Ansprüche, **dadurch gekennzeichnet, dass** die Heiz-Elemente (6) kreisförmig sind und um die Unterseite herum in der Ton-Hohlkammer (2) angeordnet sind.

8. Ofen gemäß einem der vorhergehenden Ansprüche, welcher Zubehör (26, 36, 46) zum Backen und zum Beseitigen von gebackenem Teig aufweist.

9. Ofen gemäß einem der vorhergehenden Ansprüche, welcher einen Kochtopf (4) zum Kochen von Reis aufweist, welcher eine Mehrzahl von Stahl-Rosten/Abteilen hat, wobei eines oben auf dem anderen an dem Reis-Topf montiert ist.

## Revendications

1. Four électrique en argile/terre cuite, comprenant une enveloppe extérieure (1A) munie d'un corps creux (2) fait d'argile ou de céramique et pourvu d'éléments chauffants (6), **caractérisé en ce que** ledit corps creux (2) est un vase d'une seule pièce, le haut et le bas dudit vase ayant des diamètre intérieurs égaux tandis que la partie centrale est de plus grand diamètre.

2. Four selon la revendication 1, **caractérisé en ce qu'**il comprend un isolant (22) fait de préférence de laine de roche ou de laine de verre, placé entre ledit corps creux en argile (2) et ladite enveloppe (1A).

3. Four selon la revendication 1, **caractérisé en ce que** ladite enveloppe extérieure (1A) possède une pluralité de roues montées au bas pour faciliter le déplacement.

4. Four selon la revendication 1, **caractérisé en ce que** ledit corps creux intérieur en argile (2) possède un couvercle (8) fait d'une matière choisie entre l'argile et un métal, de préférence l'acier.

5. Four selon une quelconque des revendications précédentes, **caractérisé en ce que** lesdits éléments chauffants (6) sont connectés à un circuit électrique et commandés par un panneau de commande (2A1).

6. Four selon la revendication 5, **caractérisé en ce que** ledit panneau de commande (2A1) comprend un interrupteur d'alimentation (1), un thermostat (40), un minuteur (5), une lampe témoin (20) et un indicateur de température (3).

7. Four selon une quelconque des revendications précédentes, **caractérisé en ce que** lesdits éléments chauffants (6) sont de forme circulaire et placés le long du bas du corps creux intérieur en argile (2).

8. Four selon une quelconque des revendications précédentes, comprenant des accessoires (26, 36, 46) pour cuire et retirer la pâte cuite.

9. Four selon une quelconque des revendications précédentes, comprenant une marmite (4) pour cuire le riz qui possède une pluralité de grilles ou clayettes métalliques, attachées l'une au-dessus de l'autre à ladite marmite à riz.
